# EUROPÄISCHE PATENTANMELDUNG

(11) **EP 1 199 238 A2**
(43) Veröffentlichungstag der Anmeldung: **24.04.2002**
(21) Anmeldenummer: 01123812.8
(22) Anmeldetag: 05.10.2001
(51) Int. Cl.: B61D 17/04, B62D 27/06, B62D 31/02

(54) **Schienenfahrzeug mit modular aufgebautem Wagenkasten**

(30) Priorität: 19.10.2000 DE 10053125
(71) Anmelder: DaimlerChrysler Rail Systems GmbH, 13627 Berlin (DE)
(72) Erfinder: Minges, Florian, 10787 Berlin (DE)
(74) Vertreter: Cohausz & Florack

(57) **Zusammenfassung**

Die Erfindung betrifft ein Schienenfahrzeug mit modular aufgebautem Wagenkasten. Aufgabe der Erfindung ist es, ein Schienenfahrzeug mit modular aufgebautem Wagenkasten vorzuschlagen, bei dem der Wagenkasten leicht variiert werden kann und eine Erhöhung des Vorfertigungsgrades und damit eine Verringerung der Durchlaufzeiten und eine Minimierung der Kosten erreicht wird. Erfindungsgemäß wird der Wagenkasten an sich mindestens teilweise, vorzugsweise überwiegend oder komplett in verschiedene Funktionseinheiten bildende Module in Querrichtung unterteilt, wie z. B. Kopfbereich, Fahrwerksbereich, Antriebsbereich, Fahrgast-Sitzbereich, Einstiegsbereich, Gelenk- oder Kupplungsbereich und Wagenende. Zur Erfüllung dieser verschiedenen Funktionen können verschiedene Module vorgeplant und vorgefertigt werden. Diese Module können käfigartig ausgebildet und je nach ihren spezifischen Anforderungen mehr oder weniger stabil ausgeführt sein. Die Module besitzen alle notwendigen Schnittstellen zur Aufnahme der jeweiligen Komponenten und Ausstattungsbaugruppen und können wiederum aus den konventionell üblichen vorgefertigten Komponenten wie Dach, Untergestell und Seitenwände hergestellt sein. In einer bevorzugten Ausführungsform werden die Module zu einem Wagenkasten zusammengesetzt, indem man sie beispielsweise mit Hilfe von entsprechend dimensionierten Seilen, insbesondere Drahtseilen aufreiht und verbindet.

## Beschreibung

Die Erfindung betrifft ein Schienenfahrzeug mit modular aufgebautem Wagenkasten.

Die Erfindung ist insbesondere geeignet für - aber nicht beschränkt auf - den Einsatz in Straßen- , U- und S-Bahnen, Regionalzügen, Intercity-Zügen und Waggons.

Konventionell werden Schienenfahrzeuge gebaut, indem zunächst ein geschweißter Aluminium- oder Stahl-Rohbau erstellt wird. Dieser Rohbau wird normalerweise aus den Elementen: geschweißtes Untergestell, geschweißte Seitenwände, geschweißtes Dach sowie geschweißte Frontenden und, sofern vorhanden, geschweißtes Kurzkuppelende zusammengestellt und verschweißt.

Diese Methode bewirkt sehr starke Schweißverzüge. Der Vorfertigungsgrad der Einzelkomponenten ist relativ gering, da am Gesamtwagenkasten viele Schnittstellen komponentenübergreifend vorhanden sind, z. B. an der Seitenwand bzw. dem Untergestell und den Sitzgestellen, an der Seitenwand bzw. dem Dach und der Abstützung von Dachgeräten. Außerdem ist die Ausstattung des Wagenkastens, insbesondere die Endmontage bei dieser Verfahrensweise sehr aufwendig und wenig montagefreundlich.

Daher wurde zunehmend die Modulbauweise im Schienenfahrzeugbau eingeführt. Untergestell, Seitenwände, Dach, Kopf- bzw. Kurzkuppelenden werden separat als Schweißbaugruppe oder kaltgefügte Baugruppe vorgefertigt und zu einem späteren Zeitpunkt mittels Schweißen, insbesondere Punktschweißen, Nieten oder sonstigen Kaltfügetechniken zu einem Wagenkasten verbunden.

Dieses Verfahren minimiert die Schweißverzüge und erlaubt einen relativ hohen Vorfertigungsgrad. Die Seitenwände können bereits weitestgehend mit einer Innenverkleidung versehen sein. Die Untergestellbelegung und Innendeckenmontage können im Wesentlichen ohne Überkopfarbeiten erfolgen. Große Komponenten, wie z. B. Toilettenmodule oder Schaltschränke können mit einem Kran von oben in das Fahrzeug eingebracht werden, solange das Dach noch nicht montiert ist. Gleiches gilt für Fahrerstände, die mit dem Fahrzeugkopf bereits vollständig montiert angeliefert und als eine Einheit mit dem Rest des Wagenkastens verbunden werden. Bei dieser Entwicklung wird weitestgehend von längsorientierten Modulen, beispielsweise bestehend aus Seitenwänden, Untergestell und Dach ausgegangen. Dies hat den Nachteil, dass die Module infolge ihrer Dimensionen und ihres Gewichtes schwer zu handhaben sind. Eine Vorkonfektionierbarkeit ist nur begrenzt möglich. Fehler und Toleranzen sind infolge der Größe, der Orientierung und Verwendung entsprechender Fügetechniken relativ hoch.

In der EP 0 573 384 B1 wird beispielsweise ein Wagenkastenaufbau für Schienenfahrzeuge, insbesondere Reisezugwagen beschrieben. Dabei wird der Wagenkasten in Differentialbauweise aus den modular gegliederten Montageeinheiten Untergestell, Stirnwand- und Einstiegpartien sowie den vorzugsweise in Wagenlänge durchlaufenden Seitenwand- und Dachelementen eines einstöckigen Wagens oder mit zusätzlichem Zwischenfußboden und Seitenwandelementen eines doppelstöckigen Wagens aufgebaut. Da auch hier von längsorientierten Modulen ausgegangen wird, ist mit den oben beschriebenen Nachteilen zu rechnen.

Aufgabe der Erfindung ist es, die beschriebenen Nachteile des Standes der Technik zu beseitigen und insbesondere ein Schienenfahrzeug mit modular aufgebautem Wagenkasten vorzuschlagen, bei dem der Wagenkasten leicht variiert werden kann und eine Erhöhung des Vorfertigungsgrades und damit eine Verringerung der Durchlaufzeiten und eine Minimierung der Kosten erreicht wird.

Diese Aufgabe wird durch ein Schienenfahrzeug mit modular aufgebautem Wagenkasten gemäß den Merkmalen des Anspruchs 1 gelöst.

Zweckmäßige Ausgestaltungen und Weiterbildungen der Erfindung sind in den Unteransprüchen angegeben.

Bei der bisherigen Entwicklung wird im Wesentlichen von längsorientierten Modulen ausgegangen. Ausstattungsmerkmale wie Außentüren, Trennwände, Klimageräte, Stromabnehmer, inkl. eventuell benötigter Gerätewannen auf dem Dach, Antriebseinheiten, Übergänge zwischen Hochflur- und Niederflurbereichen, Gelenk- oder Kupplungsbereiche etc. unterbrechen jedoch diese längsorientierten Module in Querrichtung. Dies führte zu der Überlegung das Modulraster quer zur Fahrtrichtung anzuordnen, wobei die einzelnen Module durch separat gefertigte Komponenten wie Dach, Untergestell und Seitenwände gebildet werden können.

Erfindungsgemäß wird der Wagenkasten an sich mindestens teilweise, vorzugsweise überwiegend oder komplett in verschiedene Funktionseinheiten bildende Module in Querrichtung unterteilt, wie z. B. Kopfbereich, Fahrwerksbereich, Antriebsbereich, Fahrgast-Sitzbereich, Einstiegsbereich, Gelenk- oder Kupplungsbereich und Wagenende. Zur Erfüllung dieser verschiedenen Funktionen können verschiedene Module vorgeplant und vorgefertigt werden. Diese Module können käfigartig ausgebildet und je nach ihren spezifischen Anforderungen mehr oder weniger stabil ausgeführt sein. Die Module besitzen alle notwendigen Schnittstellen zur Aufnahme der jeweiligen Komponenten und Ausstattungsbaugruppen.

In einer bevorzugten Ausführungsform werden die Module zu einem Wagenkasten zusammengesetzt, indem man sie beispielsweise mit Hilfe von entsprechend dimensionierten Seilen, insbesondere Drahtseilen aufreiht und verbindet. Dazu sind in den jeweiligen Langträgern (Dachlangträger und Untergestelllangträger, rechts und links) der Module Öffnungen und Flansche vorgesehen. Ein seitlicher Formschluss kann mittels formschlüssigen Elementen in den Ringspanten an den Enden der Module erreicht werden. Diese Elemente können auch zur Positionierung der Module zueinander benutzt werden. An den Enden der zu verbindenden Wagenkastenmodule werden die Drahtseile befestigt bzw. verspannt.

Mit derartigen Modulen sind Fahrzeuge verschiedener Klassen realisierbar, wobei die Ausprägung und Statik den verschiedenen Bedürfnissen angepasst werden kann. Durch verschieden angepasste Spannung der Spannseile in den Dachlangträgern und den Untergestelllangträgern kann eine beliebige Vorsprengung des Wagenkastens erreicht werden.

Die Vorteile der Erfindung bestehen darin, dass der Vorfertigungsgrad erhöht und das Einmalengineering minimiert wird. Des weiteren wird die Flexibilität durch vorgefertigte bzw. vorkonstruierte Module erhöht. Durch die verhältnismäßig kleinen Module verringern sich auftretende Fehler und Toleranzen.

Die Erfindung wird anhand der in den Zeichnungen dargestellten Ausführungsbeispiele nachfolgend näher erläutert. Es zeigen schematisch und nicht maßstäblich
- Fig. 1: ein Niederflur-Fahrgastmodul mit Schubfeldern,
- Fig. 2: ein Niederflur-Fahrgastmodul ohne Schubfelder,
- Fig. 3: ein Hochflur-Fahrgastmodul mit Schubfeldern,
- Fig. 4: ein Hochflur-Fahrgastmodul ohne Schubfelder,
- Fig. 5: vier Arten von halblangen Fahrgastmodulen,
- Fig. 6: zwei Arten von Zwischenmodulen,
- Fig. 7: ein Drehgestellmodul,
- Fig. 8: ein Fahrwerkmodul,
- Fig. 9: ein Kupplungsmodul,
- Fig. 10: ein Gelenkmodul,
- Fig. 11: zwei Arten von Kopfmodulen,
- Fig. 12: ein Modul mit zusätzlich vergrößert dargestellten Befestigungsdetails,
- Fig. 13: ein dreiteiliges Fahrgastmodul mit zusätzlich vergrößert dargestellten Befestigungsdetails,
- Fig. 14: Ringspanten mit zusätzlich vergrößert dargestellten Verbindungsdetails,
- Fig. 15: eine Straßenbahn in zwei Perspektiven und
- Fig. 16: einen Regionalzug in zwei Perspektiven.

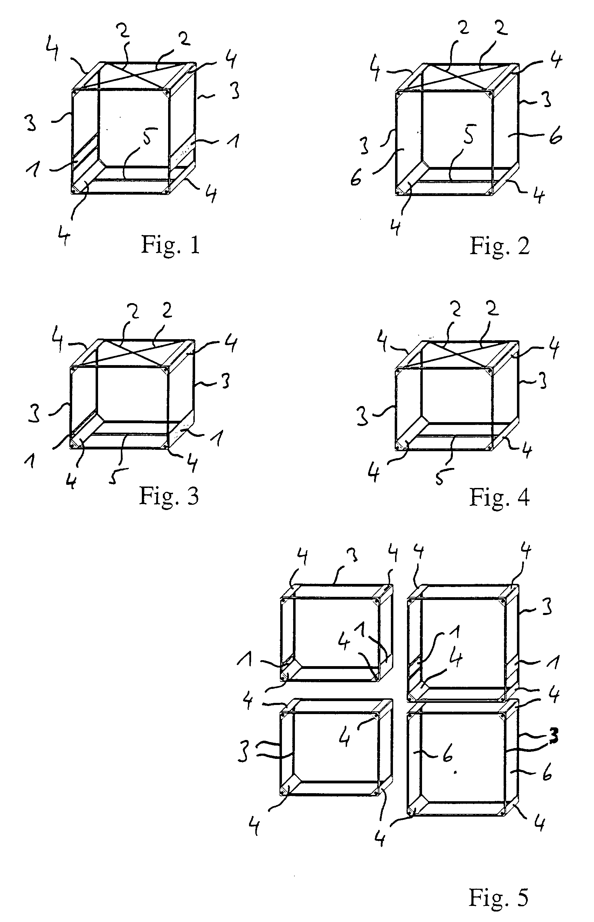

Fig. 1 zeigt ein Niederflur-Fahrgastmodul mit Schubfeldern 1 zur Aufnahme von sitzenden Passagieren.

Sitzbefestigungen, Aufnahmen für einen Fußboden sowie Innendecke sind bereits vorgesehen. Die Innen- und Außenverkleidung einer Seitenwand kann mittels zweier vorgefertigter Paneele, die bereits Fensterscheiben, Kabel - und Luftkanäle, Isolierung etc. enthalten, erfolgen. Die Länge solch eines Moduls ist an dem gewünschten Sitzteiler, in der Regel ca. 1600 mm bis 1800 mm ausgelegt. Es ist möglich, den Dachbereich dieses relativ kleinen Moduls durch Spannen von Drahtseilen 2 zu versteifen. Dadurch wird eine leichte und bauraumsparende Bauweise erzielt. Das in Fig. 1 dargestellte kastenförmige Modul besteht weiterhin aus Ringspanten 3, die an beiden Enden des Moduls umlaufend angeordnet sind sowie Längsträgern 4. Zur weiteren Versteifung dient ein Querträger 5.

Fig. 2 zeigt ein Niederflur-Fahrgastmodul ohne Schubfelder für den Einstiegsbereich und zur Aufnahme von stehenden Passagieren. Sitzbefestigungen, Aufnahmen für einen Fußboden sowie Innendecke sind bereits vorgesehen. Das Modul umfasst analog zum in Fig. 1 dargestellten Niederflur-Fahrgastmodul Drahtseile 2, Ringspanten 3, Längsträger 4 und Querträger 5. Der Türeinbau kann mittels einer vorinstallierten Tür, die sich auf einem Hilfs- bzw. Adapterrahmen befindet in dem offenen Seitenwandsegment 6 vorgenommen werden. Dieser Adapterrahmen kann die notwendige Verkleidung und Isolierung bzw. Kabel- und Luftkanäle bereits enthalten.

Entsprechende Module sind auch für einen Hochflurbereich möglich. Fig. 3 zeigt ein Hochflur-Fahrgastmodul mit Schubfeldern 1 und Fig. 4 zeigt ein Hochflur-Fahrgastmodul ohne Schubfelder. Im Gegensatz zu den Niederflur-Fahrgastmodulen weisen diese Module eine geringere Höhe auf. Analog zu den Niederflur-Fahrgastmodulen umfassen auch die dargestellten Hochflur-Fahrgastmodule Drahtseile 2, Ringspanten 3, Längsträger 4 und Querträger 5.

Zur Anpassung an verschiedene Fahrzeuglängen oder zum Erreichen eines bestimmten Fahrzeuglayouts (z.B. Sitzanordnung, Sondereinbauten etc.) können auch kürzere, insbesondere halblange Fahrgastmodule mit und ohne Schubfelder vorgesehen werden, wie in Fig. 5 dargestellt. Auch diese Module umfassen Ringspanten 3, Längsträger 4 und wahlweise Schubfelder 1 sowie offene Seitenwandsegmente 6.

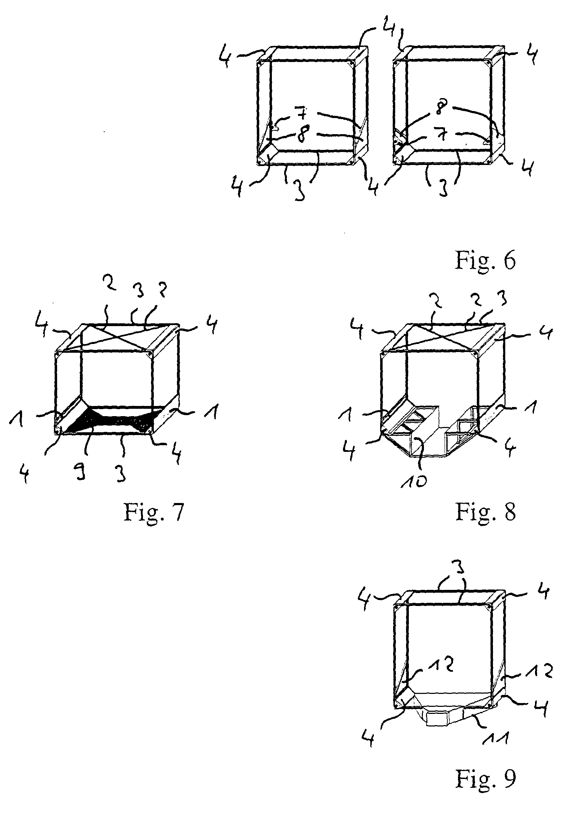

Fig. 6 zeigt für die Übergangsbereiche von Hochflur- zu Niederflur-Bereichen des Fahrzeuges speziell ausgerüstete Zwischenmodule mit den benötigten Flanschen 7 und Versteifungen 8. Diese Zwischenmodule können mit Treppen, Trennwänden, Geländer etc. vorausgerüstet werden. Auch diese Module umfassen Ringspanten 3, Längsträger 4.

Zur Aufnahme eines Drehgestelles oder Fahrwerkes werden spezielle Module vorgesehen. Das Untergestell ist in diesem Modul besonders für die Aufnahme eines Drehgestelles oder Fahrwerkes ausgeprägt, z. B. Hauptquerträger 9, Drehzapfen etc. Für Fahrzeuge mit konventionellen Drehgestellen ist dies dann ein Drehgestellmodul, wie in Fig. 7 dargestellt. Das Drehgestellmodul umfasst weiterhin Schubfelder 1, Drahtseile 2, Ringspanten 3 und Längsträger 4.

Für Niederflur-Fahrzeuge mit durchgehendem Niederflur-Boden im Fahrwerksbereich ist ein Fahrwerkmodul nach Fig. 8 vorgesehen. Dieses Fahrwerkmodul ist mit Vorrichtungen 10 speziell ausgebildet zur Aufnahme und Verkleidung von Niederflur-Fahrwerken, wie z. B. Fahrwerken ohne Drehzapfen und Fahrwerken mit Jakobsdrehgestellen. Das Fahrwerkmodul umfasst weiterhin Schubfelder 1, Drahtseile 2, Ringspanten 3 und Längsträger 4.

Fig. 9 zeigt ein zum Koppeln verschiedener Wagenteile verwendetes Kupplungsmodul. Bei einem Kupplungsmodul ist das Untergestell entsprechend mit Kupplungsaufnahmevorrichtungen 11 sowie Verstärkungsvorrichtungen 12 zur Aufnahme der Kupplung und der damit bedingten Kräfte (Kopfstück) ausgelegt. Das Kupplungsmodul umfasst weiterhin Ringspanten 3 und Längsträger 4.

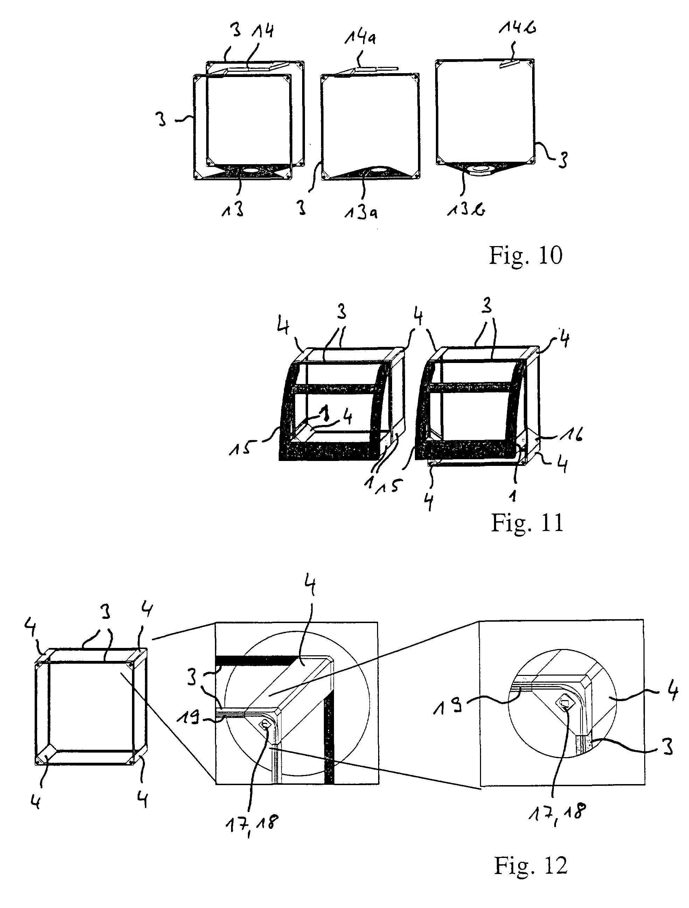

Fig. 10 zeigt ein Gelenkmodul, welches mit zwei Ringspanten 3 ausgeführt und mit einer unteren Anlenkung 13 und einer oberen Anlenkung 14 versehen ist, die horizontales und vertikales Drehen der oberen und unteren Anlenkung zueinander zulässt, aber eine Querbewegung der beiden Ringspante zueinander verhindert oder zumindest dämpft. Das Gelenkmodul lässt sich, wenn gewünscht, zweigeteilt montieren. Die untere Anlenkung 13 besteht in diesem Fall aus einem ersten unteren Anlenkungsteilstück 13a und einem zweiten unteren Anlenkungsteilstück 13b, die sich zur unteren Anlenkung 13 entsprechend ergänzen. Die obere Anlenkung 14 besteht aus einem ersten oberen Anlenkungsteilstück 14a und einem zweiten oberen Anlenkungsteilstück 14b.

Je ein Ringspant 3, inkl. der zugehörigen Anbauteile, wird dann dem entsprechenden angrenzenden Modul zugeordnet.

Fig. 11 zeigt Kopfmodule, die sowohl als Hochflurköpfe als auch als Köpfe mit Übergang zu einem Niederflurteil ausgeführt sein können. Das Kopfmodul umfasst neben dem Kopfteil 15 weiterhin Schubfelder 1, Ringspanten 3, Längsträger 4 und Verstärkungen 16. Die Kopfmodule können analog zum Kupplungsmodul mit einer Kupplungsaufnahme ausgerüstet sein.

Die Auflistung der Module ist nur beispielhaft, diese Module können grundsätzlich durch weitere Module mit verschiedenen Funktionen oder Ausprägungen ergänzt werden. Die Module selbst können selbstverständlich dem Stand der Technik entsprechend in sich wiederum modular aufgebaut sein, d. h. Untergestell, Seitenwände, Dach und Modulenden können separat gefertigt, ausgestattet und montiert werden.

Fig. 12 zeigt beispielhaft ein Modul mit Befestigungsdetails. Die Module werden zu einem Wagenkasten zusammengesetzt, indem man sie mit Hilfe von entsprechend dimensionierten Drahtseilen 20 aufreiht und verbindet. Dazu sind in den jeweiligen Langträgern 4 (Dachlangträger und Untergestelllangträger, rechts und links) der Module Öffnungen 17 und Flansche 18 vorgesehen. Ein seitlicher Formschluss kann mit Hilfe von formschlüssigen Elementen 19 in den Ringspanten an den Enden der Module erreicht werden. Diese formschlüssigen Elemente 19 können auch zur Positionierung der Module zueinander benutzt werden.

An den Enden der zu verbindenden Wagenkastenmodule werden die Drahtseile befestigt bzw. verspannt.

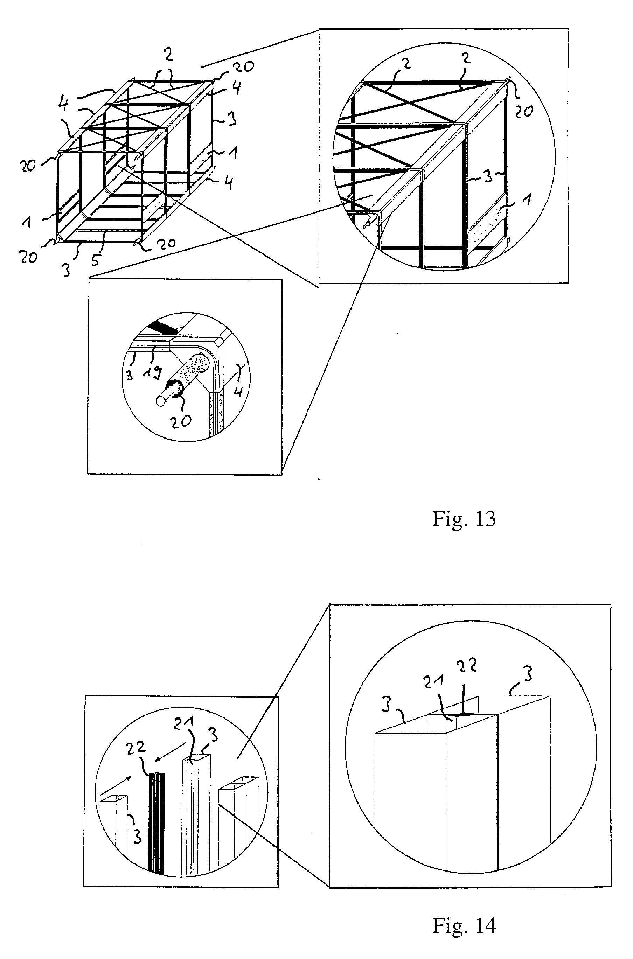

Fig. 13 zeigt ein derart mit Hilfe von Drahtseilen 20 zusammengesetztes, dreiteiliges Fahrgastmodul, bestehend aus zwei Niederflur-Fahrgastmodulen mit Schubfeldern 1 gemäß Fig. 1 und einem zwischen diesen liegenden Niederflur-Fahrgastmodul ohne Schubfelder gemäß Fig. 2.

Fig. 14 zeigt, wie in den Ringspanten 3 an den Modulenden jeweils Nuten 21 vorgesehen sind, in die eine gummielastische, dauerelastische Dichtung 22 oder pastöse Dichtmasse eingebracht werden kann.

Die einzelnen Module sind unabhängig vom Material vorstellbar, d. h. sie sind sowohl in Aluminium und/oder Stahl wie auch in anderen Materialien, wie z. B. faserverstärktem Kunststoff herstellbar.

Durch eine unterschiedliche Spannung in den Drahtseilen 20 oben (im Dachlangträger) und unten (im Untergestelllangträger) kann eine bestimmte Vorsprengung des Wagenkastens eingestellt werden.

Da die Dachlangträger im Normalfall weitestgehend auf Druck ausgelegt ist (Durchbiegung des Fahrzeuges bei Fahrt und im Anhebefall) ist die Spannung in den oberen der Drahtseile 20 hauptsächlich dafür auszulegen, dass die einzelnen Module zusammengehalten werden.

Die Spannung in den unteren der Drahtseile 20 muss so ausgelegt sein, dass eine eventuelle Vorsprengung des Wagenkastens gewährleistet ist, was zu einer erhöhten Druckbelastung der Untergestelllangträger-Elemente führt. Die Langträgerelemente sind so ausgelegt, dass sie diesem erhöhten Druck bis zur kompletten Ausstattung des Wagenkastens standhalten. Nach Ausstattung des Wagenkastens, im Fahrbetrieb und im Anhebefall werden die Untergestelllangträger durch die Durchbiegung des Wagenkastens wieder entlastet und es tritt eine erhöhte Zugbelastung in den Drahtseilen 20 auf, was eine für die Drahtseile 20 übliche Belastungsart ist.

Mit derartigen Modulen sind Fahrzeuge verschiedener Klassen realisierbar, wobei die Ausprägung und Statik den verschiedenen Bedürfnissen angepasst werden muss.

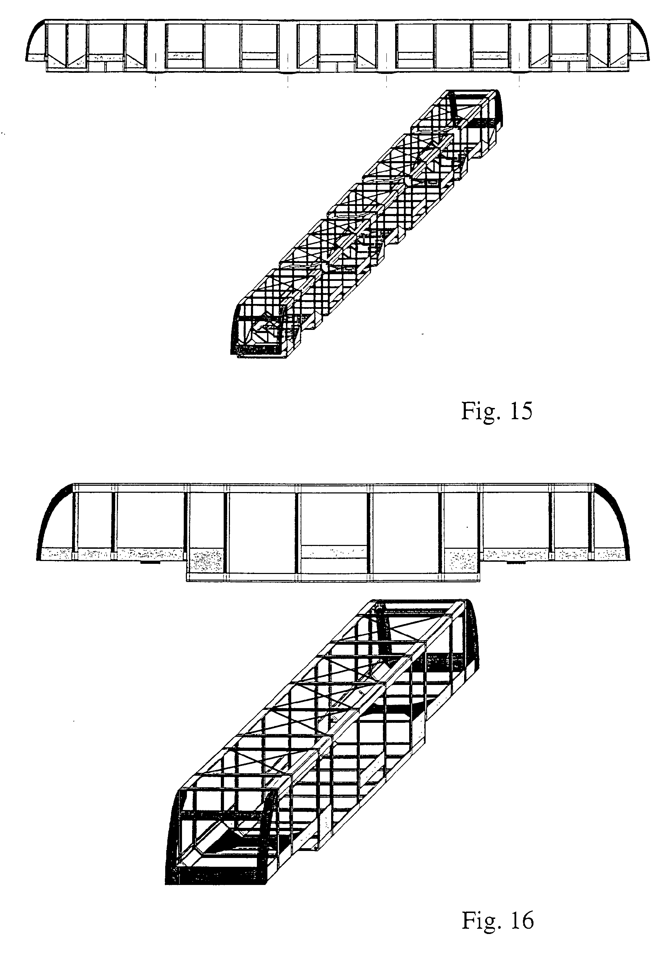

Fig. 15 zeigt eine erfindungsgemäß aus Modulen aufgebaute Straßenbahn. Diese besteht in diesem Ausführungsbeispiel aus der Aneinanderreihung von Kopfmodulen gemäß Fig. 11, Zwischenmodulen gemäß Fig. 6, Fahrwerkmodulen gemäß Fig. 8, Gelenkmodulen gemäß Fig. 10, Niederflur-Fahrtgastmodulen mit Schubfeldern gemäß Fig. 1 und Niederflurfahrgastmodulen ohne Schubfelder gemäß Fig. 2. Die Kopfmodule sind als Köpfe mit Übergang zu einem Niederflurteil ausgestattet.

Fig. 16 zeigt einen aus Modulen aufgebauten Regionalzug. Dieser besteht in diesem Ausführungsbeispiel aus der Aneinanderreihung von Kopfmodulen gemäß Fig. 11, Drehgestellmodulen gemäß Fig. 7, Zwischenmodulen ähnlich Fig. 6, Niederflurfahrgastmodulen ohne Schubfelder gemäß Fig. 2 und einem Niederflur-Fahrtgastmodul mit Schubfeldern gemäß Fig. 1. Die Kopfmodule sind als Hochflurköpfe ausgebildet. Gegenüber der Straßenbahn gemäß Fig. 15 sind die einzelnen Module entsprechend den unterschiedlichen Anforderungen (mechanische Belastungen, Kundenwünsche, etc.) abweichend dimensioniert.

## Patentansprüche

1. Schienenfahrzeug mit modular aufgebautem Wagenkasten,
**dadurch gekennzeichnet, dass** der Wagenkasten an sich mindestens teilweise in verschiedene Funktionseinheiten bildende Module in Querrichtung unterteilt ist.

2. Schienenfahrzeug nach Anspruch 1,
**dadurch gekennzeichnet, dass** der Wagenkasten an sich überwiegend oder komplett in verschiedene Funktionseinheiten bildende Module in Querrichtung unterteilt ist.

3. Schienenfahrzeug nach Anspruch 1 oder 2,
**dadurch gekennzeichnet, dass** die Module käfigartig ausgebildet sind.

4. Schienenfahrzeug nach einem der Ansprüche 1 bis 3,
**dadurch gekennzeichnet, dass** die Module je nach ihren Anforderungen mehr oder weniger stabil ausgeführt sind.

5. Schienenfahrzeug nach einem der Ansprüche 1 bis 4,
**dadurch gekennzeichnet, dass** die Module Schnittstellen zur Aufnahme von weiteren Komponenten und Ausstattungsbaugruppen besitzen.

6. Schienenfahrzeug nach einem der Ansprüche 1 bis 5,
**dadurch gekennzeichnet, dass** mindestens ein Modul einen Kopfbereich des Schienenfahrzeugs bildet.

7. Schienenfahrzeug nach einem der Ansprüche 1 bis 6,
**dadurch gekennzeichnet, dass** mindestens ein Modul einen Fahrwerksbereich des Schienenfahrzeugs bildet.

8. Schienenfahrzeug nach einem der Ansprüche 1 bis 7,
**dadurch gekennzeichnet, dass** mindestens ein Modul einen Antriebsbereich des Schienenfahrzeugs bildet.

9. Schienenfahrzeug nach einem der Ansprüche 1 bis 8,
**dadurch gekennzeichnet, dass** mindestens ein Modul einen Fahrgast-Sitzbereich des Schienenfahrzeugs bildet.

10. Schienenfahrzeug nach einem der Ansprüche 1 bis 9,
**dadurch gekennzeichnet, dass** mindestens ein Modul einen Einstiegsbereich des Schienenfahrzeugs bildet.

11. Schienenfahrzeug nach einem der Ansprüche 1 bis 10,
**dadurch gekennzeichnet, dass** mindestens ein Modul einen Gelenk- und/oder Kupplungsbereich des Schienenfahrzeugs bildet.

12. Schienenfahrzeug nach einem der Ansprüche 1 bis 11,
**dadurch gekennzeichnet, dass** mindestens ein Modul ein Wagenende des Schienenfahrzeugs bildet.

13. Schienenfahrzeug nach einem der Ansprüche 1 bis 12,
**dadurch gekennzeichnet, dass** die Module zu einem Wagenkasten zusammengesetzt, insbesondere mit Hilfe von entsprechend dimensionierten Seilen, insbesondere Drahtseilen (20) aufgereiht und verbunden sind.

14. Schienenfahrzeug nach Anspruch 13,
**dadurch gekennzeichnet, dass** in den jeweiligen Langträgern (4), beispielsweise in mindestens einem Dachlangträger und/oder mindestens einem Untergestelllangträger der Module Öffnungen (17) und Flansche (18) zur Aufnahme der Drahtseile (20) vorgesehen sind.

15. Schienenfahrzeug nach Anspruch 13 oder 14,
**dadurch gekennzeichnet, dass** ein seitlicher Formschluss mit Hilfe von formschlüssigen Elementen (19) in mindestens einem der Ringspanten (3) an den Enden der Module erreicht wird.

16. Schienenfahrzeug nach einem der Ansprüche 13 bis 15,
**dadurch gekennzeichnet, dass** die Drahtseile (20) an den Enden der zu verbindenden Module des Wagenkastens befestigt und/oder verspannt sind.

17. Schienenfahrzeug nach einem der Ansprüche 1 bis 16,
**dadurch gekennzeichnet, dass** mindestens ein Modul Mittel zum Verstärken, insbesondere Querträger (5), Versteifungen (8) und/oder Verstärkungsvorrichtungen (16) aufweist.

18. Schienenfahrzeug nach einem der Ansprüche 1 bis 17,
**dadurch gekennzeichnet, dass** mindestens ein Modul Mittel zum Abdichten, insbesondere Nuten (21) in gegenüberliegenden Ringspanten (3) und dazwischenliegende, insbesondere gummi- und/oder dauerelastische Dichtungen (22) oder dazwischenliegende pastöse Dichtmassen aufweist.

19. Schienenfahrzeug nach einem der Ansprüche 1 bis 18,
**dadurch gekennzeichnet, dass** mindestens ein Modul aus Aluminium, Stahl oder faserverstärktem Kunststoff besteht.

20. Schienenfahrzeug nach einem der Ansprüche 13 bis 19,
**dadurch gekennzeichnet, dass** durch eine unterschiedliche Spannung in den Drahtseilen (20) oben, d. h. im Dachlangträger und unten, d. h. im Untergestelllangträger eine bestimmte Vorsprengung des Wagenkastens eingestellt ist.
